# EUROPÄISCHE PATENTANMELDUNG

(11) **EP 3 875 273 A1**
(43) Veröffentlichungstag der Anmeldung: **08.09.2021**
(21) Anmeldenummer: 20160381.8
(22) Anmeldetag: 02.03.2020
(51) Int. Cl.: B41F 33/00

(54) **VERFAHREN ZUR AUFZEICHNUNG VON INSPEKTIONSDATEN VON DRUCKERZEUGNISSEN**

(71) Anmelder: BST eltromat International GmbH, 33739 Bielefeld (DE)
(72) Erfinder: van Pels, Oliver, 33818 Leopoldshöhe (DE); Kohl, Ulrich, 33818 Leopoldshöhe (DE); Lohmeier, Christian, 33818 Leopoldshöhe (DE)
(74) Vertreter: Ter Meer Steinmeister & Partner

(57) **Zusammenfassung**

Verfahren zur Aufzeichnung von Inspektionsdaten von mit einer Druckmaschine hergestellten Druckerzeugnissen, die eine Folge von sich wiederholenden Formatbildern (18) aufweisen, bei welchem Verfahren digitale Bilder von fehlerhaften Teilen des Druckerzeugnisses gespeichert werden, dadurch gekennzeichnet, dass zumindest für einen Ausschnitt des sich wiederholenden Formats ein komprimierter Videostream einer regelmäßigen Folge der Formatbilder gespeichert wird.

## Beschreibung

Die Erfindung betrifft ein Verfahren zur Aufzeichnung von Inspektionsdaten von mit einer Druckmaschine hergestellten Druckerzeugnissen, die eine Folge von sich wiederholenden Formatbildern aufweisen, bei welchem Verfahren digitale Bilder von fehlerhaften Teilen des Druckerzeugnisses gespeichert werden.

In der Druckindustrie ist es üblich, während des Betriebs einer Rotationsdruckmaschine eine sogenannte Bahnbeobachtung durchzuführen, bei der mit einer stroboskopischen Kamera Bilder von ausgewählten Ausschnitten der zu druckenden Formate an der laufenden Bahn aufgenommen und auf einem Bildschirm dargestellt werden, so dass der Drucker die Möglichkeit hat, besonders kritische Zonen des gedruckten Bildes im Hinblick auf etwaige unerwünschte Veränderungen zu überwachen. Weiterhin gibt es Inspektionssysteme, mit denen bei laufender Produktion und/oder nach Abschluss der Produktion die komplette bedruckte Bahn inspiziert wird, um Fehler im Druckergebnis festzustellen und ggf. die schadhaften Teile der bedruckten Bahn auszuschneiden. Ein solches Inspektionssystem kann beispielsweise eine Zeilenkamera aufweisen, mit der die durchlaufende, frisch bedruckte Bedruckstoffbahn auf ganzer Breite abgetastet wird, so dass man digitale Bilder von allen gedruckten Formatbildern erhält. Die aufgezeichneten Bilder können visuell vom menschlichen Personal inspiziert werden und/oder mittels digitaler Bildauswertung elektronisch auf Fehler untersucht werden, typischerweise durch Vergleich des jeweils aufgenommenen digitalen Bildes mit einem Referenzbild, das den Sollzustand repräsentiert.

Wegen der großen Datenmenge ist die auf diese Weise erhaltene Bilddatei jedoch zu umfangreich als das sie über einen längeren Zeitraum gespeichert werden könnte. Es ist deshalb bisher üblich, bei der Inspektion ein digitales Inspektionsprotokoll anzufertigen, das einen erheblich reduzierten Datenumfang hat. Das kann beispielsweise dadurch geschehen, dass die gespeicherten Bilddaten auf das direkte Umfeld einer erkannten Fehlstelle beschränkt werden, und/oder dass bei großflächigen Fehlern die Bildauflösung begrenzt wird. Andere Möglichkeiten bestehen darin, bei einer Folge von gleichartigen Fehlstellen nur ein repräsentatives Bild auszuwählen und zu speichern. Darüber hinaus können natürlich übliche Kompressionstechniken wie JPEG und dergleichen eingesetzt werden. Das Gutmaterial, bei dem keine Fehler festgestellt wurden, wird entweder gar nicht oder nur stichprobenartig in Bildern festgehalten.

Nachteile dieser bekannten Verfahren bestehen darin, dass die automatische Fehlerdetektion erst ab einer bestimmten Detektionsschwelle anspricht und im allgemeinen weniger sensitiv ist als das menschliche Auge. Wenn jedoch die Speicherung der Bilddaten erst bei der ersten Detektion des Fehlers einsetzt, besteht keine Möglichkeit mehr, die früher inspizierten Teile der Bahn auf schwächere Ausprägungen des sich allmählich entwickelnden Defekts zu untersuchen. Wenn die Bildauflösung reduziert wird, sind großflächige aber feinstrukturierte Defekte wie z.B. Registerfehler oft nicht mehr erkennbar. Wenn nur einzelne repräsentative Fehler gespeichert werden, ist es auch nicht möglich, die zeitliche Entwicklung und Dynamik eines Fehlers nachzuvollziehen. Wenn die Häufigkeit eines Fehlers zunimmt, besteht auch keine Möglichkeit mehr, das bereits früher inspizierte Material nachträglich noch einmal zu überprüfen. Dasselbe gilt, wenn die Detektionskriterien nachträglich geändert werden.

Aufgabe der Erfindung ist es, ein Verfahren zu schaffen, das es erlaubt, die Qualität der Inspektion von Druckerzeugnissen und der Protokollierung der Inspektionsergebnisse zu verbessern und dabei die benötige Speicherkapazität in Grenzen zu halten.

Diese Aufgabe wird erfindungsgemäß dadurch gelöst, dass zumindest für einen Ausschnitt des sich wiederholenden Formats ein komprimierter Videostream einer regelmäßigen Folge der Formatbilder gespeichert wird.

Der Videostream besteht somit aus einer Folge von digitalen Frames, die über einen gewissen Zeitraum hinweg lückenlos alle nacheinander gedruckten Formatbilder wiedergeben. Gegenüber der Speicherung von einzelnen Fehlerbildern hat dieses Verfahren den Vorteil, dass die dynamische Entwicklung der Fehler über die Zeit hinweg verfolgt werden kann. Bei der Komprimierung der Bilddaten kann man sich den Umstand zunutze machen, dass die nacheinander gedruckten Formatbilder im Idealfall denselben Bildinhalt haben, so dass die digitalen Frames eine hohe Redundanz aufweisen. Dies erlaubt eine Datenkompression mit einem sehr hohen Kompressionsverhältnis, beispielsweise in der Form, dass jeweils nur die (vergleichsweise geringen) Veränderungen von Bild zu Bild gespeichert werden. Auf diese Weise lässt sich bei gegebener Speicherkapazität eine sehr umfangreiche Dokumentation der Inspektionsergebnisse anlegen, beispielsweise durch Absenken der Detektionsschwelle, so dass die Qualität der Inspektion deutlich verbessert wird.

Der Ausdruck "regelmäßige Folge" bezeichnet eine Folge von Formatbildern, die entweder lückenlos alle Formatbilder umfasst sowie auch eine Folge, die jedes zweite Formatbild oder jedes dritte Formatbild etc. enthält und somit einen zeitgerafften Videostream darstellt.

Vorteilhafte Ausgestaltungen und Weiterbildungen der Erfindung ergeben sich aus den Unteransprüchen.

In einer Ausführungsform wird die Aufzeichnung des Videostreams nur dann ausgelöst, wenn bei der automatischen Inspektion ein Fehler festgestellt wird oder das Ausmaß des Fehlers einen vordefinierten Schwellenwert übersteigt. In anderen Ausführungsformen wird die Aufzeichnung nur dann ausgelöst, wenn ein sich wiederholender Fehler festgestellt wird oder wenn die Fehlerhäufigkeit zunimmt.

Die Aufzeichnung kann auf einen kleineren Ausschnitt des Formats beschränkt werden, in dem der Fehler aufgetreten ist.

In einer anderen Ausführungsform wird das komplette Format fortlaufend während der gesamten Dauer der Produktion aufgezeichnet, so dass man einen komprimierten, aber lückenlosen Videostream des kompletten Druckerzeugnisses erhält. In diesem Fall bietet das Verfahren den Vorteil, dass die Historie eines Fehlers auch noch rückwirkend überprüft werden kann, wenn der Fehler erst in einem relativ späten Stadium während des Produktionsablaufes festgestellt wurde. Ebenso ist es möglich, die Detektionskriterien nachträglich zu ändern und die Inspektion mit dem neuen Kriterium anhand des aufgezeichneten Videostreams zu wiederholen.

In dem aufgezeichneten Videostream ist vorzugsweise jedem Frame eine Nummer zugeordnet, die den Druckzeitpunkt bzw. die Position des betreffenden Formatbildes auf der Bedruckstoffbahn angibt.

In einer vorteilhaften Ausführungsform enthält die Videodatei außerdem für jeden Frame oder jeweils für mehrere zu einer Gruppe zusammengefasste Frames ein Kommentarfeld, in dem Kommentare zum Inspektionsergebnis eingetragen und gespeichert werden können, vorzugsweise jeweils mit einem Verweis auf die Position im Frame, auf die sich der Kommentar bezieht.

Das Verfahren ist nicht nur bei Rotationsdruckmaschinen anwendbar, sondern auch im Digitaldruck. Im letzteren Fall ist es möglich, die Bedruckstoffbahn in mehrere "Lanes" aufzuteilen, die jeweils einen anderen Repeat haben können. Das erfindungsgemäße Aufzeichnungsverfahren kann dann für die verschiedenen Lanes wahlweise auch getrennt und unabhängig von der Aufzeichnung in den anderen Lanes ausgeführt werden.

Im folgenden wird ein Ausführungsbeispiel anhand der Zeichnung näher erläutert.

Es zeigen:
- Fig. 1: eine Prinzipskizze eines Bahninspektionssystems in einer Rotationsdruckmaschine;
- Fig. 2: ein Blockdiagramm eines Inspektionssystems, mit dem das erfindungsgemäße Verfahren ausführbar ist;
- Fig. 3: eine Folge von auf eine Bedruckstoffbahn gedruckten Formatbildern mit verschiedenen Arten von Fehlern;
- Fig. 4: ein Diagramm zur Illustration eines Verfahrens zur Lagekorrektur von digitalen Bildern in dem erfindungsgemäßen Verfahren; und
- Fig. 5: ein Diagramm eines Verfahrens zur Datenkompression bei der Erzeugung eines erfindungsgemäßen Videostreams.

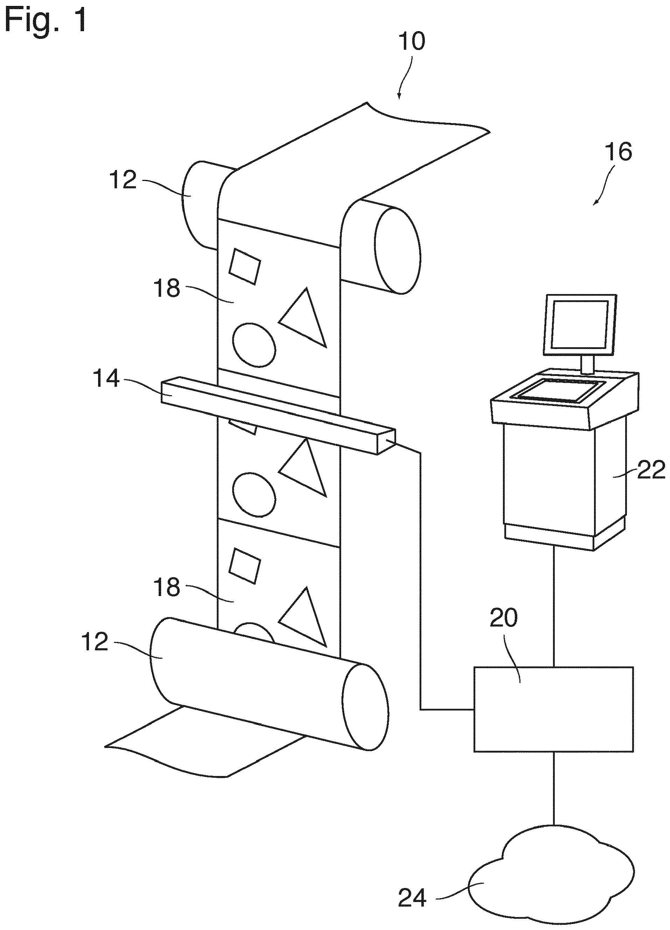

In Fig. 1 ist ein Abschnitt einer Bedruckstoffbahn 10 gezeigt, die in einer Rotationsdruckmaschine über Umlenkrollen 12 geführt ist und an einer Zeilenkamera 14 vorbeiläuft, die sich über die gesamte Breite der Bedruckstoffbahn erstreckt und Teil eines Inspektionssystems 16 ist. Die Bedruckstoffbahn 10 ist in der Druckmaschine mit einer Folge von sich wiederholenden Formatbildern 18 bedruckt worden. Mit der Zeilenkamera 14 werden diese Formatbilder abgetastet und digital aufgezeichnet. Zur Verarbeitung der digitalen Bilddaten weist das Inspektionssystem ein elektronisches Auswertungssystem 20 auf, das mit einer Benutzerschnittstelle 22 und mit einem Netzwerk 24 (dem Internet) kommuniziert.

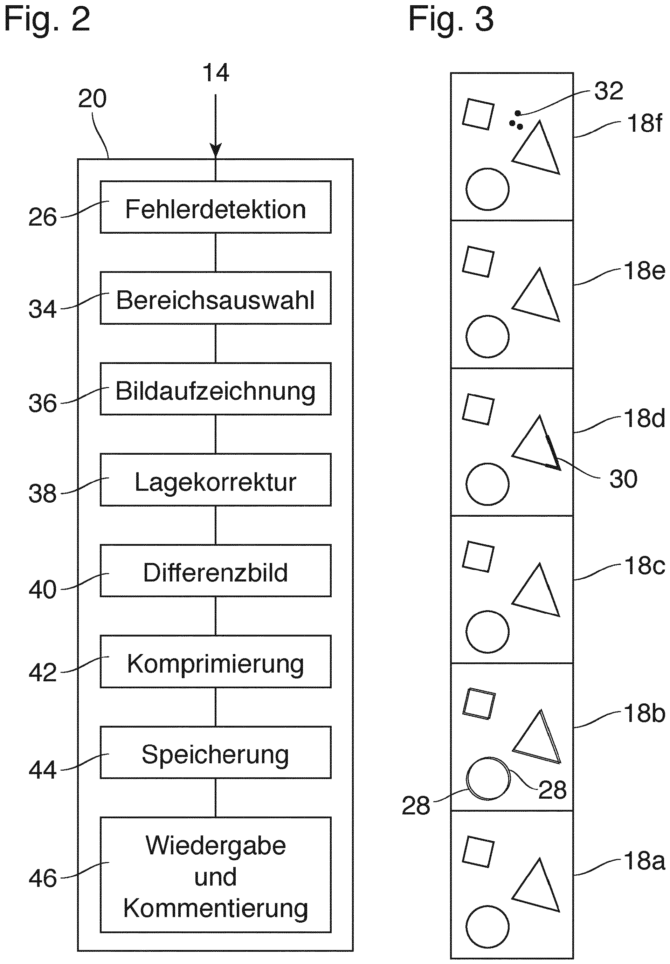

In Fig. 2 sind verschiedene Bearbeitungsstufen des Auswertungssystems 20 dargestellt. In einer Fehlerdetektionsstufe 26 werden die von der Zeilenkamera 14 während des Betriebs der Druckmaschine gelieferten Daten mit digitalen Bildauswertungstechniken analysiert, und die digitalen Kopien der Formatbilder 18 werden in Echtzeit anhand bestimmter Detektionskriterien auf etwa vorhandene Fehler im Druckbild untersucht. Die dazu benötigen Verfahren zur Fehlerdetektion sind bekannt und werden hier nicht näher beschrieben.

Zur Illustration verschiedener Fehlertypen ist in Fig. 3 eine Folge von digitalen Bildern 18a-18f gezeigt, bei denen es sich um Abbilder der nacheinander auf die Bedruckstoffbahn 10 gedruckten Formatbilder 18 handelt. Im gezeigten Beispiel sind die Bilder 18a, 18c und 18e fehlerfrei. Das Bild 18b illustriert einen Passerfehler, bei dem zwei Farbauszugsbilder 28 in dem Formatbild etwas gegeneinander versetzt sind. Bild 18d illustriert einen Farbdichtefehler, bei dem aufgrund eines ungleichmäßigen Andrucks der Druckwalze am rechten Rand der Bedruckstoffbahn etwas zu viel Druckfarbe aufgetragen wurde, so dass die Farbdichte und/oder der Farbton verfälscht wird.

Bild 18f illustriert schließlich einen Fehler, der darin besteht, dass die Bedruckstoffbahn durch Farbspritzer 32 verunreinigt wurde.

Die in den Bildern 18b und 18d gezeigten Fehler beruhen auf fehlerhaften Einstellungen der Druckmaschine und werden deshalb in der Praxis nicht sporadisch zwischen fehlerfreien Bildern auftreten, wie vereinfachend in Fig. 3 gezeigt ist, sondern werden sich bei einer Vielzahl aufeinanderfolgender Formatbilder wiederholen, wobei die Intensität der Ausprägung des Fehlers über die Zeit variieren kann.

Wenn in der Fehlerdetektionsstufe 26 ein Fehler festgestellt wurde, so kann in einer anschließenden Bereichsauswahlstufe 34 automatisch ein bestimmter Bereich des Formats ausgewählt werden, in dem der gefundene Fehler lokalisiert ist. Beispielsweise könnte im Fall der Farbspritzer 32 ein kleiner Ausschnitt des Formats ausgewählt werden, der diese Farbspritzer enthält. Der Passerfehler in Bild 18b ist hingegen über die gesamte Fläche des Formats verteilt und lässt sich im Prinzip nicht näher lokalisieren. Dennoch ist es auch hier möglich, einen Bildausschnitt auszuwählen, in dem der Passerfehler besonders deutlich sichtbar ist.

In einer Bildaufzeichnungsstufe 36 wird dann die Bildaufzeichnung für die Erstellung eines Videoprotokolls gestartet. Das heißt, die digitalen Daten der ausgewählten Bildausschnitte werden in einem Arbeitsspeicher gespeichert.

Wahlweise kann das Inspektionssystems auch so programmiert werden, dass in der Bereichsauswahlstufe 34 das gesamte Format ausgewählt wird, also praktisch keine Bereichsauswahl stattfindet. Ebenso kann festgelegt werden, dass die Bildaufzeichnung in der Bildaufzeichnungsstufe 36 unabhängig von der Fehlerdetektion bereits bei Produktionsbeginn startet.

Insbesondere bei den letzteren Varianten des Verfahrens wird im Lauf der Produktion eine beträchtliche Datenmenge anfallen, so dass es notwendig ist, die Daten erheblich zu komprimieren. Im Kern beruht diese Datenkompression darauf, dass im Idealfall, wenn alle Formatbilder 18 auf der Bedruckstoffbahn fehlerfrei wären, die zugehörigen digitalen Bilder 18a-18f untereinander identisch sein müssten, so dass, wenn man zwei beliebige digitale Bilder herausgreift und deren Bilddaten voneinander subtrahiert, das entstehende Differenzbild ohne Inhalt sein müsste. In dem Fall würde es genügen, nur ein einziges digitales Bild, beispielsweise das Bild 18a zu speichern, ohne dass Information über den Produktionsablauf verloren ginge.

In dem in Fig. 3 gezeigten Beispiel wäre dagegen das Differenzbild aus den Bildern 18a und 18b nicht leer, da das Bild mit Passerfehlern von dem Bild ohne Passerfehler verschieden ist. Das Differenzbild aus den Bildern 18c und 18d hätte nur an der Stelle des Farbdichtefehlers 30 einen Bildinhalt und wäre im übrigen leer, so dass man mit üblichen Kompressionstechniken den Datenumfang erheblich reduzieren könnte. Dasselbe gilt auch für das Differenzbild aus den Bildern 18e und 18f, in dem nur das Bild der Farbspritzer 32 übrig bliebe.

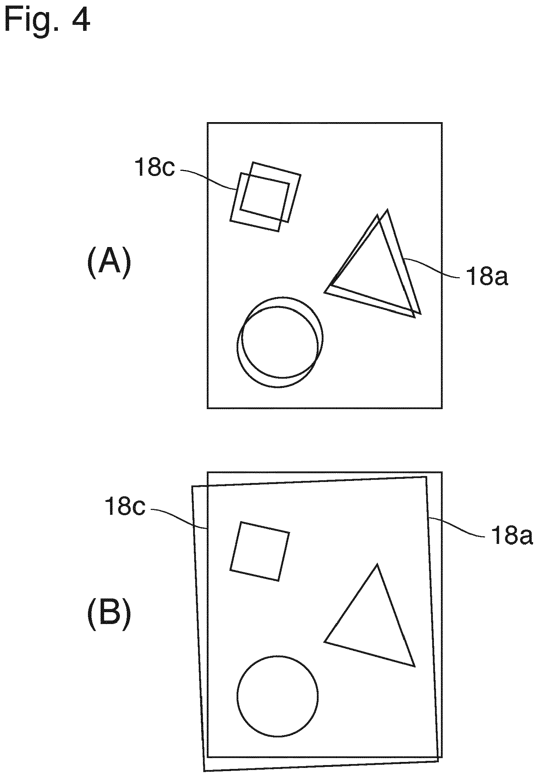

In der Praxis entsteht jedoch eine gewisse Komplikation dadurch, dass im Lauf des Produktionsprozesses die laterale Position und auch die Laufrichtung der Bedruckstoffbahn 10 relativ zur Zeilenkamera 14 etwas variieren kann. Auch die Geschwindigkeit des Bahntransports kann gewissen Fluktuationen unterliegen, was zu Positionsfehlern in Laufrichtung der Bahn führt. Bevor die digitalen Bilder miteinander verglichen werden können, ist es deshalb zweckmäßig, in einer Lagekorrekturstufe 38 eine Lagekorrektur an den digitalen Bildern vorzunehmen. Diese Prozedur ist in Fig. 4 am Beispiel der beiden fehlerfreien Bilder 18a und 18c illustriert. In der Abbildung (A) sind die beiden digitalen Bilder 18a und 18c übereinander gelegt, so dass aufgrund der Positionsfehler die Bildinhalte gegeneinander verschoben und verdreht sind. In der Abbildung (B) ist das Bild 18a so verschoben und gedreht worden, dass die Bildinhalte zur Deckung gebracht wurden. Wenn in diesem Zustand das Differenzbild berechnet wird, so treten in dem Differenzbild nur die echten Fehler auf.

In der Praxis ist es natürlich aufgrund der vorhandenen Fehler im allgemeinen nicht möglich, die Bildinhalte vollständig zur Deckung zu bringen. Es ist jedoch stets möglich, die Bilder so zu verschieben und zu verdrehen, dass die Abweichungen zwischen den Bildinhalten minimiert werden. Im Fall von Passerfehlern kann man sich dabei auf einen einzelnen Farbauszug beschränken, so dass für diesen einen Farbauszug die Bildinhalte zur Deckung gebracht werden können. Die verbleibenden Unterschiede in den übrigen Farbauszügen repräsentieren dann echte Passerfehler.

Unter Umständen kann im Lauf des Produktionsprozesses auch die Skalierung des mit der Zeilenkamera 14 aufgenommenen Bildes variieren, beispielsweise aufgrund von Wärmeausdehnung in der Zeilenkamera. In dem Fall kann es erforderlich sein, in der Lagekorrekturstufe 38 zusätzlich eine Skalierungskorrektur vorzunehmen, um eine bestmögliche Kongruenz der Bildinhalte zu erreichen.

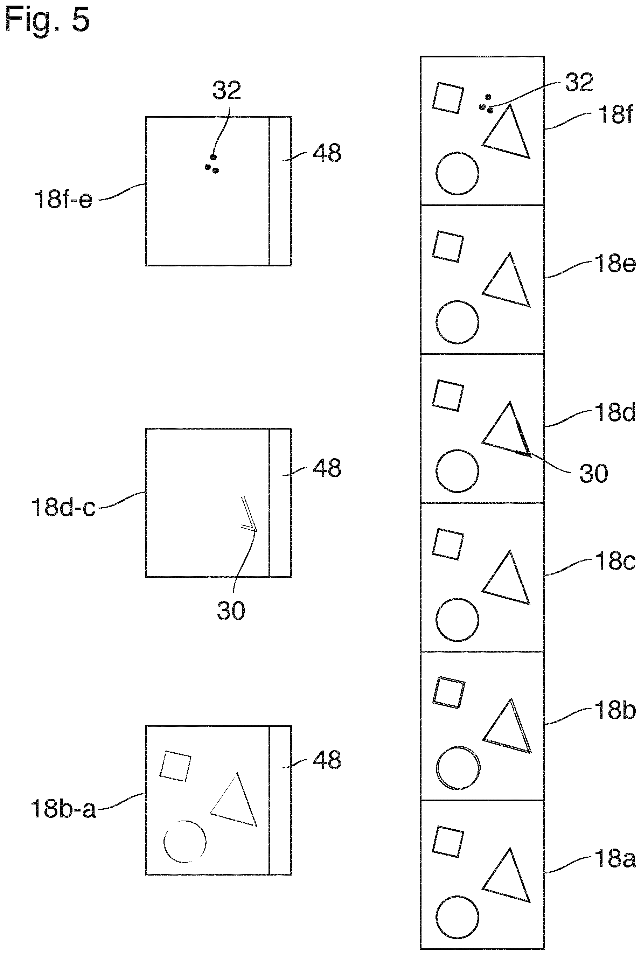

In einer Differenzbildstufe 40 wird dann für jedes Paar von digitalen Bildern 18a-18f, für die eine Lagekorrektur vorgenommen wurde, das Differenzbild berechnet. Beispiele für Differenzbilder 18f-e, 18d-c und 18b-a für die Paarungen der Bilder 18f und 18e, 18d und 18c sowie 18b und 18a sind in Fig. 5 gezeigt.

Bei sporadisch auftretenden Fehlern wie beispielsweise den Farbspritzern 32 genügt es im allgemeinen, zwei unmittelbar aufeinanderfolgende Formatbilder miteinander zu vergleichen. Bei Fehlern, die in ihrem Ausmaß nur langsam variieren, wie etwa die Farbdichtefehler 30 und die Passerfehler, kann dagegen der Unterschied von Bild zu Bild unterhalb der Detektionsschwelle liegen. Um auch solche Fehler zu detektieren und festhalten zu können, ist es deshalb zweckmäßig, Differenzbilder auch für Paare von digitalen Bildern zu erzeugen, die einen größeren zeitlichen Abstand zueinander haben.

Wenn alle Differenzbilder (bis zu dem aktuell von der Zeilenkamera aufgenommenen Bild) berechnet wurden, so werden in einer Kompressionsstufe 42 die Bilddaten jedes Differenzbildes mit den üblichen Algorithmen komprimiert, und in einer Speicherstufe 44 werden die komprimierten Daten als komprimierter Videostream gespeichert. Ebenso wird auch eine komprimierte Version des zuerst aufgezeichneten Bildes, beispielsweise des Bildes 18a als Referenzbild gespeichert. Der Datenumfang ist dann insgesamt so weit reduziert, dass der Videostream bei Bedarf auch über einen längeren Zeitraum als Video-Rollenprotokoll gespeichert werden kann. Wenn eine nähere Inspektion erwünscht ist, kann in einer Wiedergabestufe 46 aus dem gespeicherten Referenzbild und den gespeicherten Differenzbildern eine Videosequenz rekonstruiert und auf der Benutzerschnittstelle 22 angezeigt werden, die nahezu ohne Informationsverlust den gesamten Produktionsablauf wiedergibt. Besonders vorteilhaft ist dabei, dass beim Betrachten des Videos die dynamische Entwicklung der Fehler in Echtzeit oder wahlweise auch in Zeitlupe oder Zeitraffer verfolgt werden kann. Bei langsam veränderlichen Fehlern, für die nur Differenzbilder zwischen weit auseinanderliegenden Formatbildern gespeichert wurden, lässt sich die Veränderung in den dazwischen liegenden Frames durch Interpolation rekonstruieren.

Es versteht sich, dass zu jedem Differenzbild auch eine Frame-Nummer gespeichert wird, die angibt, auf welches des Formatbild auf der Bedruckstoffbahn sich das Differenzbild bezieht. Anhand dieser Frame-Nummer ist es möglich, nach Abschluss des Druckprozesses das komplette Druckerzeugnis virtuell "umzuspulen" und in dem Videoprotokoll jeden interessierenden Punkt auf der Bedruckstoffbahn anzufahren. Wie in Fig. 5 gezeigt ist, werden in dem komprimierten Videostream zu mindestens einigen der Differenzbilder auch ein Kommentarfeld 48 gespeichert, in dem zu jedem Formatbild bzw. zu jeder Gruppe von Formatbildern, auf denen ein bestimmter Fehler sichtbar ist, Kommentare und Anmerkungen und andere Zusatzinformationen eingetragen werden können. Über das Netzwerk 24 können diese Informationen auch anderen Nutzern zugänglich gemacht werden.

## Patentansprüche

1. Verfahren zur Aufzeichnung von Inspektionsdaten von mit einer Druckmaschine hergestellten Druckerzeugnissen, die eine Folge von sich wiederholenden Formatbildern (18) aufweisen, bei welchem Verfahren digitale Bilder von fehlerhaften Teilen des Druckerzeugnisses gespeichert werden, **dadurch gekennzeichnet, dass** zumindest für einen Ausschnitt des sich wiederholenden Formats ein komprimierter Videostream einer regelmäßigen Folge der Formatbilder gespeichert wird.

2. Verfahren nach Anspruch 1, bei dem der komprimierte Videostream das komplette Format wiedergibt.

3. Verfahren nach einem der vorstehenden Ansprüche, bei dem die digitalen Bilder bei laufender Produktion mit einem Fehlerdetektionsalgorithmus untersucht werden und die Aufzeichnung des Videostreams nur dann gestartet wird, wenn eine vorgegebene Detektionsbedingung erfüllt ist.

4. Verfahren nach einem der vorstehenden Ansprüche, bei dem zur Erzeugung des komprimierten Videostreams Differenzbilder (18b-a), (18d-c), (18f-e) zwischen digitalen Bildern (18a-18f) berechnet werden, die zu verschiedenen Zeiten gedruckte Formatbilder (18) wiedergeben.

5. Verfahren nach Anspruch 4, bei dem an den digitalen Bildern (18a-18f) vor der Berechnung der Differenzbilder eine Lagekorrektur vorgenommen wird.

6. Verfahren nach einem der vorstehenden Ansprüche, bei dem in dem komprimierten Videostream zusätzlich zu den Bilddaten auch Kommentarinformation (48) gespeichert wird, die sich auf einzelne Frames oder Gruppen von Frames bezieht.
